# EUROPEAN PATENT APPLICATION

(11) **EP 4 835 421 A1**
(43) Date of publication of application: **04.11.2026**
(21) Application number: 26175250.5
(22) Date of filing: 28.04.2026
(51) Int. Cl.: G01K 1/14, G01K 1/18, G01K 3/00, H01B 7/32, H01R 13/66, H01R 31/06, H01R 107/00

(54) **POWER TRANSMISSION CABLE FOR A POWER SUPPLY**

(30) Priority: 02.05.2025 TW 114116553; 30.04.2025 CN 202520851952 U
(71) Applicant: Corsair Memory, Inc., Milpitas, CA 95035 (US)
(72) Inventor: Lin, Yung-Chung, 709032 Tainan City (TW); Fang, Yi-Hsiung, 709032 Tainan City (TW)
(74) Representative: 2K Patent Partnerschaft mbB

(57) **Abstract**

The present application provides a power transmission cable (30) for a power supply (20). The power transmission cable (30) comprises a plurality of wires (31) and two connectors (32) respectively disposed at two opposite ends of the plurality of wires (31). Further, the power transmission cable (30) comprises a temperature sensing device (33). The temperature sensing device (33) comprises a bracket (331) and a temperature sensing element (332) disposed on the bracket (331). The bracket (331) is attached onto the power transmission cable (30) with the plurality of wires (31) as a basis. The temperature sensing element (332) comprises at least one signal wire (333), and the temperature sensing element (332) changes an electrical signal of the at least one signal wire (333) based on the temperature of wire sections (330) of the plurality of wires (31) located at the bracket (331).

## Description

### TECHNICAL FIELD

The present application relates to a power transmission cable, and more particularly to a power transmission cable for a power supply.

### BACKGROUND

With the advancement of technology, the power wattage that a power supply can provide has increased, and the power transmission quality thereof has likewise received greater attention. In order to improve the stability and reliability of power transmission quality, a power transmission cable for a current power supply has evolved from a single wire to a wire-bundle configuration using a plurality of wires for power supply. However, although the wire-bundle configuration using the plurality of wires can effectively reduce current density when the conductors carry current, such configuration also increases wiring issues in an electronic device equipped with the power supply and is unfavorable to heat dissipation of the electronic device.

Accordingly, the Peripheral Component Interconnect Special Interest Group (PCI-SIG) established a set of standards to redefine specifications for cables and connectors of high-power components, thereby reintegrating the bundled configuration of the plurality of wires into a power transmission cable having a 12VHPWR connector. The power transmission cable serves as a power transmission bridge between a high-power component and the power supply.

However, as technology continues to evolve, it has been found that, when connector terminals of the foregoing power transmission cable are not completely connected, problems such as excessive contact impedance and uneven current distribution are likely to occur, thereby causing the power transmission cable to burn out during operation of the electronic device. To improve the foregoing problems, the Peripheral Component Interconnect Special Interest Group improved the power transmission cable having the 12VHPWR connector and modified it into a power transmission cable having a 12V-2x6 connector. Compared with the previous configuration, the latter has adjusted the lengths of signal terminals on the connector to reduce the foregoing problems. Nevertheless, current power transmission cables having 12V-2x6 connectors still have concerns of high-temperature burnout, and cannot effectively and reliably detect the temperature of the power transmission cable or even provide an over-temperature protection mechanism therefor.

Regarding published patents, although CN 204966866U, CN 115868089A, and the like disclose technical solutions using a temperature sensing element to detect the temperature of a power transmission cable, in which the temperature sensing element senses temperature and, when the sensed temperature reaches a set value, triggers activation of a high-temperature protection mechanism to reduce the load of the power supply, the foregoing cases require modification of the structural design of the power transmission cable in order to provide the temperature sensing element. As a result, the modified connector structure is likely to have insufficient mating with the power supply, thereby causing excessive contact impedance and generating high temperature.

### BRIEF SUMMARY

A primary objective of the present application is to solve problems derived from the need to modify an original structural design of a conventional power transmission cable in order to provide temperature sensing.

To achieve the above-mentioned object, the present application provides a power transmission cable for a power supply. The power transmission cable comprises a plurality of wires and two connectors respectively disposed at two opposite ends of the plurality of wires. The power transmission cable is characterized in that the two connectors are 12V-2x6 connectors, and the power transmission cable further comprises a temperature sensing device. The temperature sensing device comprises a bracket and a temperature sensing element disposed on the bracket. The bracket is attached onto the power transmission cable with the plurality of wires as a basis. The temperature sensing element comprises at least one signal wire, and the temperature sensing element is configured to change an electrical signal of the at least one signal wire based on the temperature of wire sections of the plurality of wires located at the bracket.

In one embodiment, each of the two connectors comprises a plurality of signal pins. The at least one signal wire is connected to one of the plurality of signal pins, and the plurality of signal pins are connected to a load. Electrical signals on the plurality of signal pins determine electrical power that the load can draw through the power transmission cable.

In one embodiment, the bracket comprises a base on which the temperature sensing element is disposed, and at least one cap cooperating with the base to clamp the plurality of wires.

In one embodiment, the temperature sensing device comprises a heat conducting plate contacting the plurality of wires and the temperature sensing element.

In one embodiment, the bracket comprises two caps. The two caps are respectively located on two opposite sides of the base, and the two caps and the base jointly clamp the plurality of wires.

In one embodiment, the base forms a hollow region in which the temperature sensing element is disposed.

In one embodiment, at least one of the base and the at least one cap is formed with a plurality of wire grooves for positioning the plurality of wires.

In one embodiment, at least one of the plurality of wire grooves has a first portion in which one of the plurality of wires is disposed and a second portion in which the at least one signal wire is disposed.

In one embodiment, the base and the at least one cap are respectively formed with a fastening structure.

According to the foregoing embodiments of the present application, as compared with conventional technology, the present application has the following features. The present application is provided with the temperature sensing device, and the temperature sensing device is attached onto the power transmission cable through the bracket. Compared with conventional technology, the temperature sensing device of the present application can sense the temperature of the plurality of wires of the power transmission cable and achieve temperature monitoring by changing the electrical signal of the at least one signal wire. Meanwhile, the temperature sensing device of the present application does not require modification of the original structural design of the power transmission cable, thereby simplifying assembly of the temperature sensing device and reducing concems of poor contact caused by structural modification.

### BRIEF DESCRIPTION OF FIGURES

FIG. 1 is a schematic view of an embodiment of the present application used with a power supply.
FIG. 2 is a perspective schematic view of a structure according to an embodiment of the present application.
FIG. 3 is an exploded schematic view of a temperature sensing device according to an embodiment of the present application.
FIG. 4 is a cross-sectional schematic view of the temperature sensing device according to an embodiment of the present application.

### DETAILED DESCRIPTION

The present application is described in detail below with reference to the drawings.

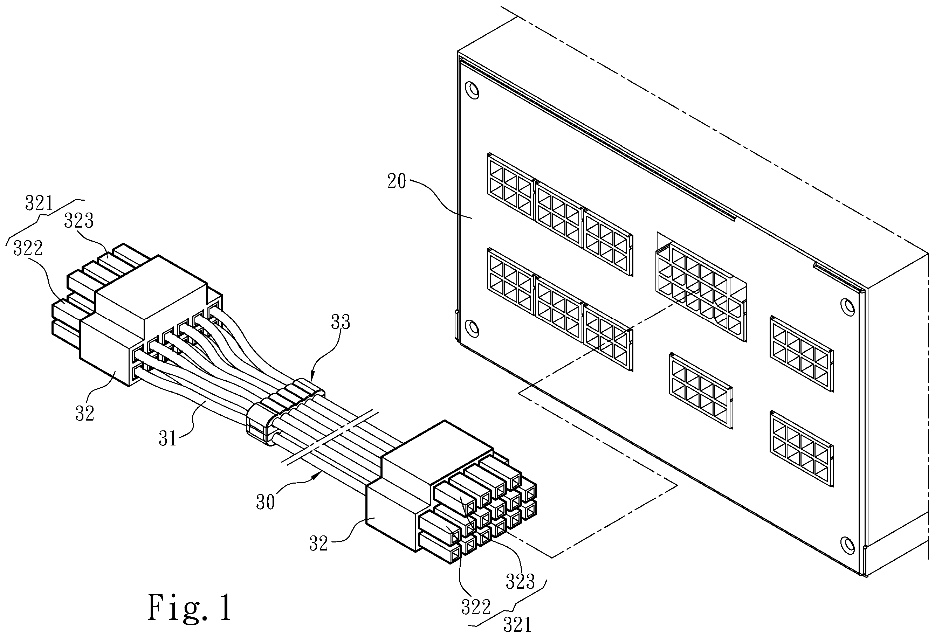

Referring to FIGS. 1, 2, 3, and 4, the present application provides a power transmission cable 30. The power transmission cable 30 is a peripheral accessory of a power supply 20 and transmits electrical signals from the power supply 20 to a load. For example, the load may be a graphics processing unit (GPU) or the like.

The power transmission cable 30 comprises a plurality of wires 31 and two connectors 32. The plurality of wires 31 are disposed between the power supply 20 and the load and serve as an electrical-signal transmission bridge between the power supply 20 and the load. The two connectors 32 are disposed at two opposite ends of the plurality of wires 31 and are respectively configured to connect to the power supply 20 and the load. In one embodiment, the two connectors 32 conform to the 12V-2x6 standard specification defined by the Peripheral Component Interconnect Special Interest Group. As explained with reference to FIG. 1, each of the two connectors 32 comprises a plurality of signal pins 321. The plurality of signal pins 321 may be classified into twelve current-carrying pins 322 and four signal detection pins 323. The 12V-2x6 standard specification indicates that the foregoing twelve current-carrying pins 322 include six 12V pins and six ground pins, and the current-carrying pins 322 are arranged in two rows and six columns.

The power transmission cable 30 further comprises a temperature sensing device 33. The temperature sensing device 33 comprises a bracket 331 and a temperature sensing element 332. The bracket 331 and the temperature sensing element 332 do not change the original architecture of the power transmission cable 30. The bracket 331 is attached onto the power transmission cable 30 with the plurality of wires 31 as a basis. The temperature sensing element 332 is disposed on the bracket 331 and is configured to be capable of sensing a temperature of wire sections of the plurality of wires 31 located at the bracket 331. More specifically, the bracket 331 may be disposed at any position on the plurality of wires 31. Preferably, the bracket 331 is positioned adjacent to one of the two connectors 32 that is configured to connect to the load. This is because, when the power transmission cable 30 transmits power, a temperature rise of the two connectors 32 is more significant due to contact impedance and copper wire resistance. Positioning the bracket 331 adjacent to the one of the two connectors 32 that is configured to connect to the load enables the temperature sensing element 332 to indirectly monitor the temperature of the one of the two connectors 32 that is configured to connect to the load by sensing the temperature of the plurality of wires 31.

Further, the temperature sensing element 332 comprises at least one signal wire 333. The at least one signal wire 333 is connected to a temperature control unit. The temperature sensing element 332 is configured to change an electrical signal of the at least one signal wire 333 based on the temperature of the wire sections of the plurality of wires 31 located at the bracket 331, and transmits the electrical signal to the temperature control unit, such that the temperature control unit generates corresponding control based on the electrical signal, such as temperature monitoring, load reduction, and the like. As used herein, the temperature control unit may be the power supply 20 or the load.

As can be understood from the foregoing, the present application detects the temperature of the wire sections of the plurality of wires 31 on the power transmission cable 30 through the temperature sensing device 33. In addition, the design of the temperature sensing device 33 does not require modification of the structural design of the power transmission cable 30. Through the bracket 331, the temperature sensing element 332 is directly installed on the plurality of wires 31 in an attached manner, thereby reducing installation complexity. Meanwhile, because the plurality of wires 31 can transmit both thermal energy and electrical signals, the present application achieves features of low implementation cost and high reliability.

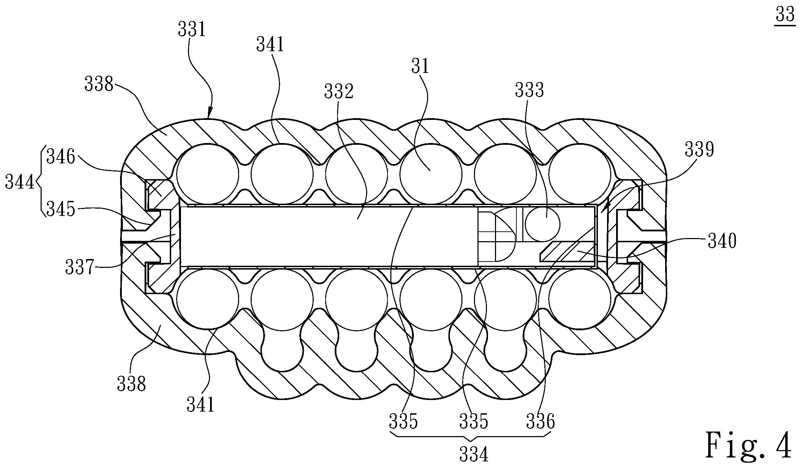

Referring again to FIGS. 1, 2, 3, and 4, in order to improve the temperature sensing effect of the temperature sensing element 332 with respect to the plurality of wires 31, in one embodiment, the temperature sensing element 332 is located on one side of the plurality of wires 31. In another embodiment, the temperature sensing element 332 is located between the plurality of wires 31, such that the plurality of wires 31 are respectively located on two opposite sides of the temperature sensing element 332 to the greatest extent possible, as shown in FIG. 4. As observed from FIG. 1, the temperature sensing element 332 is not exposed on a surface of the power transmission cable 30.

Referring again to FIGS. 1, 2, 3, and 4, in one embodiment, the at least one signal wire 333 is connected to one of the plurality of signal pins 321. The plurality of signal pins 321 are connected to the load, such that the at least one signal wire 333 is electrically connected to the load. Electrical signals on the plurality of signal pins 321 of one of the two connectors 32 that is configured to connect to the load determine electrical power that the load can draw through the power transmission cable 30.

More specifically, in one embodiment, the temperature sensing element 332 may be a temperature control switch. The foregoing change in the electrical signals on the plurality of signal pins 321 depends on the temperature sensed by the temperature control switch, and may generate a change in electrical potential. It should be noted that the temperature sensing element 332 of the present application may be a thermistor. When the thermistor senses that a temperature rise of the plurality of wires 31 is significant and substantially increases its resistance value, the thermistor causes a circuit between the at least one signal wire 333 and the load to be in an open-circuit state, thereby causing the electrical signals on the plurality of signal pins 321 to be regarded as changed.

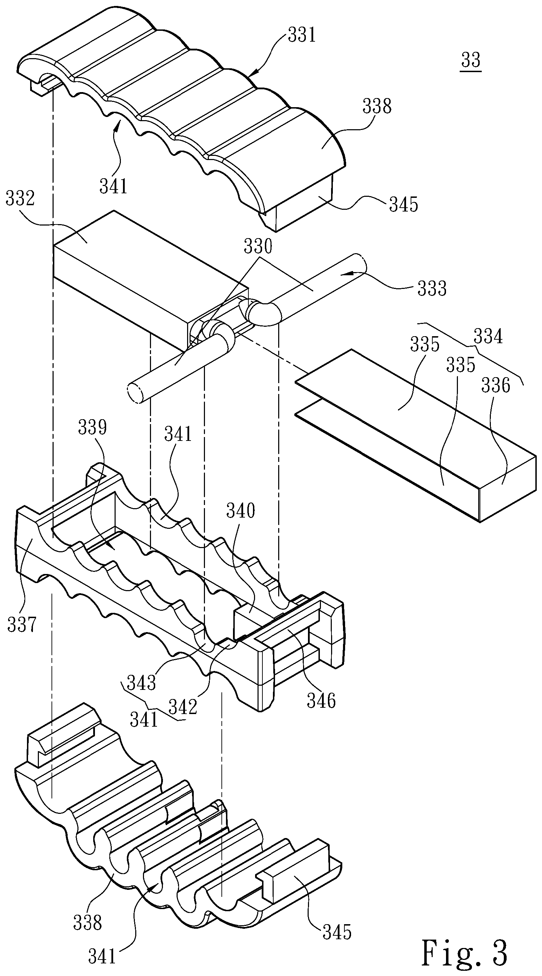

Taking FIG. 3 as an example, the at least one signal wire 333 may be divided into two wire sections 330. One of the two wire sections 330 is connected to a ground terminal of the power supply 20, and the other of the two wire sections 330 is connected to one of the foregoing four signal detection pins 323, such as S4, as referred to by persons skilled in the art. Initially, a circuit between the two wire sections 330 is conductive. When the temperature sensing element 332 senses that the temperature of the wire sections of the plurality of wires 31 increases, the circuit between the two wire sections 330 is changed to an open circuit, thereby changing the electrical signal of the at least one signal wire 333 and causing a maximum load limit during operation of the load to be reduced to 300 watts. It should be understood that the foregoing description of load reduction is merely an example, and the actual maximum load limit may be adjusted based on connection of the at least one signal wire 333 with the power supply 20 and the plurality of signal pins 321, as shown in the following table.

**[Table 1] Relationship between circuit control of signal detection pins and maximum load limit.**

| S3 | S4 | Maximum Load Limit |
|---|---|---|
| Ground | Ground | 600 watts |
| Open | Ground | 450 watts |
| Ground | Open | 300 watts |
| Short | Short | 150 watts |
| Open | Open | 0 watts |

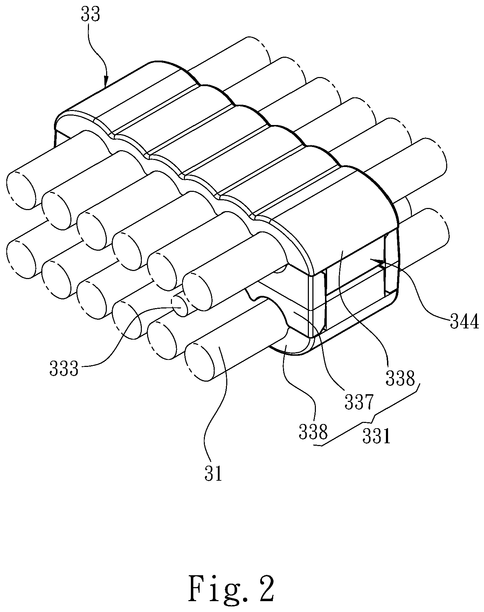

On the other hand, referring to FIGS. 2, 3, and 4, in order to guide thermal energy of the plurality of wires 31 toward the temperature sensing element 332, in one embodiment, the temperature sensing device 33 further comprises a heat conducting plate 334. The heat conducting plate 334 contacts the plurality of wires 31 and the temperature sensing element 332. A material of the heat conducting plate 334 has good thermal conductivity, such as copper. The heat conducting plate 334 assists in transferring the thermal energy of the plurality of wires 31 to the temperature sensing element 332. In another embodiment, since the plurality of wires 31 are respectively disposed on two sides of the temperature sensing element 332, the heat conducting plate 334 comprises two contact portions 335 respectively disposed on two sides of the temperature sensing element 332, and at least one connecting portion 336 connecting the two contact portions 335.

Further, referring to FIGS. 2, 3, and 4, in one embodiment, the bracket 331 of the present application comprises a base 337 and at least one cap 338. The base 337 is configured for disposition of the temperature sensing element 332. In one embodiment, the base 337 is disposed between the plurality of wires 31, such that the plurality of wires 31 are distributed on a surface of the temperature sensing element 332 to the greatest extent possible. The at least one cap 338 is disposed on the base 337. The at least one cap 338 cooperates with the base 337 to clamp the plurality of wires 31 and, at the same time, restricts the temperature sensing element 332 from separating from the plurality of wires 31.

More specifically, in another embodiment, the base 337 of the present application forms a hollow region 339, and the hollow region 339 allows the temperature sensing element 332 to be disposed therein. In yet another embodiment, the base 337 of the present application has at least one protrusion 340 disposed in the hollow region 339. The at least one protrusion 340 is disposed between two signal wires 333 of the temperature sensing element 332 so as to separate the two signal wires 333 from each other.

In another embodiment, at least one of the base 337 and the at least one cap 338 is formed with a plurality of wire grooves 341. The plurality of wire grooves 341 are configured to position the plurality of wires 31. In the present embodiment, the base 337 and the at least one cap 338 are both formed with the plurality of wire grooves 341. Each of the plurality of wire grooves 341 of the present application allows one of the plurality of wires 31 to be disposed therein, thereby achieving a defined positioning effect. In yet another embodiment, at least one of the plurality of wire grooves 341 is configured to position both the plurality of wires 31 and the at least one signal wire 333. At least one of the plurality of wire grooves 341 has a first portion 342 in which one of the plurality of wires 31 is disposed and a second portion 343 in which the at least one signal wire 333 is disposed.

In another embodiment, the bracket 331 comprises two caps 338. The two caps 338 are respectively located on two opposite sides of the base 337, and the two caps 338 and the base 337 jointly clamp the plurality of wires 31, thereby allowing the plurality of wires 31 to be disposed on two opposite sides of the base 337 and further distributed on a surface of the temperature sensing element 332. It should be noted that the forms of the two caps 338 of the present application may be respectively designed according to requirements. The two caps 338 are not limited to having the same structure, and primarily need to jointly clamp the plurality of wires 31 with the base 337. In still another embodiment, the base 337 and the at least one cap 338 of the present application are respectively formed with a fastening structure 344. The fastening structure 344 allows the base 337 and the at least one cap 338 to be selectively separated, thereby facilitating assembly of the plurality of wires 31 by an operator. In one embodiment, the fastening structure 344 comprises an assembly hook 345 and an assembly block 346 connectable with the assembly hook 345.

## Claims

1. A power transmission cable (30) for a power supply (20), wherein the power transmission cable (30) comprises a plurality of wires (31) and two connectors (32) respectively disposed at two opposite ends of the plurality of wires (31), and the power transmission cable (30) is **characterized in that**:
the two connectors (32) are 12V-2x6 connectors, and
the power transmission cable (30) further comprises a temperature sensing device (33) comprising a bracket (331) and a temperature sensing element (332) disposed on the bracket (331), wherein the bracket (331) is attached onto the power transmission cable (30) with the plurality of wires (31) as a basis, and the temperature sensing element (332) comprises at least one signal wire (333), and the temperature sensing element (332) is configured to change an electrical signal of the at least one signal wire (333) based on temperature of wire sections (330) of the plurality of wires (31) located at the bracket (331).

2. The power transmission cable (30) as claimed in claim 1, wherein each of the two connectors (32) comprises a plurality of signal pins (321), the at least one signal wire (333) is connected to one of the plurality of signal pins (321), the plurality of signal pins (321) are connected to a load, and electrical signals on the plurality of signal pins (321) determine electrical power that the load can draw through the power transmission cable (30).

3. The power transmission cable (30) as claimed in claim 1 or 2, wherein the bracket (331) comprises a base (337) on which the temperature sensing element (332) is disposed, and at least one cap (338) cooperating with the base (337) to clamp the plurality of wires (31).

4. The power transmission cable (30) as claimed in claim 3, wherein the temperature sensing device (33) comprises a heat conducting plate (334) contacting the plurality of wires (31) and the temperature sensing element (332).

5. The power transmission cable (30) as claimed in claim 3, wherein the bracket (331) comprises two caps (338), the two caps (338) are respectively located on two opposite sides of the base (337), and the two caps (338) and the base (337) jointly clamp the plurality of wires (31).

6. The power transmission cable (30) as claimed in claim 5, wherein the base (337) forms a hollow region (339) in which the temperature sensing element (332) is disposed.

7. The power transmission cable (30) as claimed in claim 3, wherein at least one of the base (337) and the at least one cap is formed with a plurality of wire grooves (341) for positioning the plurality of wires (31).

8. The power transmission cable (30) as claimed in claim 7, wherein at least one of the plurality of wire grooves (341) has a first portion (342) in which one of the plurality of wires (31) is disposed and a second portion (343) in which the at least one signal wire (333) is disposed.

9. The power transmission cable (30) as claimed in claim 3, wherein the base (337) and the at least one cap are respectively formed with a fastening structure (344).
